# EUROPÄISCHE PATENTANMELDUNG

(11) **EP 2 910 160 A1**
(43) Veröffentlichungstag der Anmeldung: **26.08.2015**
(21) Anmeldenummer: 15150450.3
(22) Anmeldetag: 08.01.2015
(51) Int. Cl.: A47J 43/046

(54) **Vorrichtung zum Aufschäumen von Milch**

(30) Priorität: 21.02.2014 DE 202014100794 U
(71) Anmelder: Melitta Europa GmbH & Co. KG, 32427 Minden (DE)
(72) Erfinder: Neuhaus, Sven, 32549 Bad Oeynhausen (DE)
(74) Vertreter: Dantz, Jan Henning

(57) **Zusammenfassung**

Eine Vorrichtung (1) zum Aufschäumen von Milch, mit einem Behälter (2), in den Milch einfüllbar ist, einer Heizeinrichtung zum Erhitzen der Milch und mindestens einem motorisch angetriebenen Quirl (5, 5'), der drehbar innerhalb des Behälters (2) zum Aufschäumen der Milch angeordnet ist, wobei der Quirl (5, 5') mindestens einen Magneten (10) aufweist, der mit einem drehbaren Antriebselement (6) magnetisch gekoppelt ist.

## Beschreibung

Die vorliegende Erfindung betrifft eine Vorrichtung zum Aufschäumen von Milch, mit einem Behälter, in den Milch einfüllbar ist, einer Heizeinrichtung zum Erhitzen der Milch und mindestens einem motorisch angetriebenen Quirl, der drehbar innerhalb des Behälters zum Aufschäumen der Milch angeordnet ist.

Es gibt Vorrichtungen zum Aufschäumen von Milch, bei denen am Boden des Behälters ein Quirl drehbar gelagert ist, um Milch in Bewegung zu setzen und dabei Luft in die Milch einzuschlagen. Zusätzlich wird die Milch erhitzt, wobei es problematisch ist, wenn die Milch an der Innenwand des Behälters ansetzt oder anbrennt. Selbst wenn der Quirl zum Bewegen der Milch aus dem Behälter herausnehmbar ist, sind am Boden des Behälters Lagerzapfen oder andere Einrichtungen angeordnet, die schlecht zu reinigen sind.

Ferner sind Milchaufschäumer bekannt, bei denen der Antrieb des Quirls in den Deckel des Geräts integriert ist. Dadurch wird die Handhabung beim Bewegen des Deckels erschwert, da die Antriebselemente für den Quirl in dem Deckel angeordnet sind und mit dem Deckel bewegt werden müssen.

Es ist daher Aufgabe der vorliegenden Erfindung, eine Vorrichtung zum Aufschäumen von Milch zu schaffen, die leicht zu reinigen ist und eine einfache Handhabung gewährleistet.

Diese Aufgabe wird mit einer Vorrichtung zum Aufschäumen von Milch mit den Merkmalen des Anspruches 1 gellst.

Erfindungsgemäß ist in dem Behälter ein motorisch angetriebener Quirl vorgesehen, der mindestens einen Magneten aufweist, der mit einem drehbaren Antriebselement magnetisch gekoppelt ist. Dadurch muss für den Antrieb des Quirls keine mechanische Verbindung über ein Lagerelement, wie einen Lagerzapfen, eine Lagerhülse oder andere Bauteile erfolgen, sondern die magnetische Kopplung ermöglicht einen indirekten Antrieb, der es ermöglicht, den Behälter mit weitgehend ebenen Oberflächen auszustatten. Dadurch kann die Reinigung vereinfacht werden, insbesondere wenn der Quirl nach Überwindung der Magnetkräfte aus dem Behälter herausgenommen wird. Zudem kann ein Deckel des Behälters leichtgängig geöffnet und geschlossen werden, da der Motor und das Antriebselement an dem Behälter montiert sind.

Vorzugsweise ist das drehbare Antriebselement im oder unter dem Boden des Behälters angeordnet. Dadurch ergibt sich ein besonders kompakter Aufbau, und das drehbare Antriebselement ist von außen nicht sichtbar angeordnet. Zur Kopplung des Antriebselementes mit dem Quirl können jeweils mindestens zwei Magnete vorgesehen sein, vorzugsweise drei oder vier Magnete, die für eine stabile drehfeste Verbindung zwischen Antriebselement und Quirl sorgen. Über die Magnete des Antriebselementes kann der Quirl dabei zentriert werden. Die Magnete können dabei in einem gleichen Abstand zur Drehachse angeordnet sein, wobei gegenüberliegende Magnete am Quirl und am Antriebselement entgegengesetzt gepolt sind.

Gemäß einer weiteren Ausgestaltung der Erfindung ist das Antriebselement über einen Elektromotor angetrieben. Der Elektromotor kann dabei im oder unterhalb des Bodens des Behälters angeordnet sein, wobei beispielsweise eine Drehachse des Elektromotors das Antriebselement antreibt und lagert.

Für eine leichtgängige Reinigung ist der Boden des Behälters im Wesentlichen eben ausgebildet. Dabei können kleinere Vertiefungen vorgesehen sein, beispielsweise eine kalottenförmige Vertiefung zur Aufnahme eines Lagers des Quirls. Die Vertiefung kann mit einer Tiefe in einem Bereich zwischen 0,2 mm und 2 mm angeordnet sein, so dass beim Reinigungsvorgang keine größeren Höhen oder Tiefen zu überwinden sind, insbesondere können scharfe Kanten vermieden werden. Vorzugsweise ist der Boden des Behälters jedoch vollständig eben bis zum Rand ausgebildet.

Für eine einfache Reinigung kann der Quirl aus dem Behälter unter Entkopplung der Magnete herausgenommen werden. Der Quirl kann dabei ein Auflager aufweisen, das eine Drehachse für den Quirl bildet, so dass eine leichtgängige Drehung des Quirls möglich ist. Das Auflager kann dabei spitz oder kalottenförmig ausgebildet sein. Zudem ist es möglich, im Bereich des Auflagers eine kleine Vertiefung am Boden vorzusehen.

Der Quirl zum Aufschäumen von Milch kann mehrere Arme und/oder eine Spirale aufweisen, um die im Behälter befindliche Milch zu bewegen und Luft in die Milch einzuschlagen. Hierfür kann der Quirl einen Kunststoffkörper aufweisen, an dem entsprechende Arme oder eine Spirale aus Metall oder Kunststoff vorgesehen sind. Ein Auflager des Quirls kann aus Kunststoff aus Metall hergestellt sein. Über den Kunststoffkörper kann der Quirl auch innerhalb des Behälters zentriert gelagert werden.

Die Erfindung wird nachfolgend anhand zweier Ausführungsbeispiele mit Bezug auf die beigefügten Zeichnungen näher erläutert. Es zeigen:
- Figur 1: eine schematische Ansicht durch eine Vorrichtung zum Aufschäumen von Milch;
- Figuren 2A und 2B: zwei Ansichten eines Quirls der Vorrichtung der Figur 1, und
- Figuren 3A und 3B: zwei Ansichten eines modifizierten Quirls für eine Vorrichtung der Figur 1.

Eine Vorrichtung zum Aufschäumen von Milch umfasst einen Behälter 2, der einen Boden 3 aufweist, und Seitenwände, die einen Innenraum umgeben. Der Behälter 2 kann aus Edelstahl hergestellt sein und auf der zum Innenraum 4 gewandten Seite am Boden 3 und den Seitenwänden eine Beschichtung aufweisen, beispielsweise eine Antihaftbeschichtung aus einem keramischen Material, PTFE oder einen anderen Material.

Im Bereich des Bodens 3 oder der Seitenwände kann eine Heizeinrichtung zum Erhitzen von Milch vorgesehen sein, die den Behälter 2 erhitzt und somit indirekt auch die Milch in dem Behälter 2. Ferner ist in dem Innenraum 4 am Boden 3 ein Quirl 5 angeordnet, der drehbar ist und dazu dient, Luft zur Erzeugung von Schaum in die Milch einzuschlagen.

Der Quirl 5 wird über ein Antriebselement 6 angetrieben, das wiederum durch einen Elektromotor 7 angetrieben ist. Der Elektromotor 7 treibt eine Welle 8 an, auf der das Antriebselement 6 drehbar gelagert ist. Das Antriebselement 6 ist unterhalb des Bodens 3 des Behälters 2 angeordnet und weist vier Magnete 9 auf, die an Aufnahmen des Antriebselementes 6 gehalten sind. Der Quirl 5 kann über das Antriebselement 6 magnetisch angetrieben werden, wobei der Quirl 5 hierfür ebenfalls Magnete 10 aufweist, insbesondere vier Magnete 10, die in entsprechenden Aufnahmen 11 an dem Quirl 5 gehalten sind. Die Magnete 10 sind jeweils zu dem Magneten 9 am Antriebselement entgegengesetzt gepolt, so dass bei einer Drehung des Antriebselementes 6 auch der Quirl 5 gedreht wird.

Der Quirl 5 weist ferner ein Auflager 12 auf, das auch ein Drehlager bildet und auf dem Boden 3 anliegt. Das Auflager 12 kann als Spitze oder als Wölbung oder Kalotte ausgebildet sein, um eine leichtgängige Bewegung des Quirls 5 zu gewährleisten.

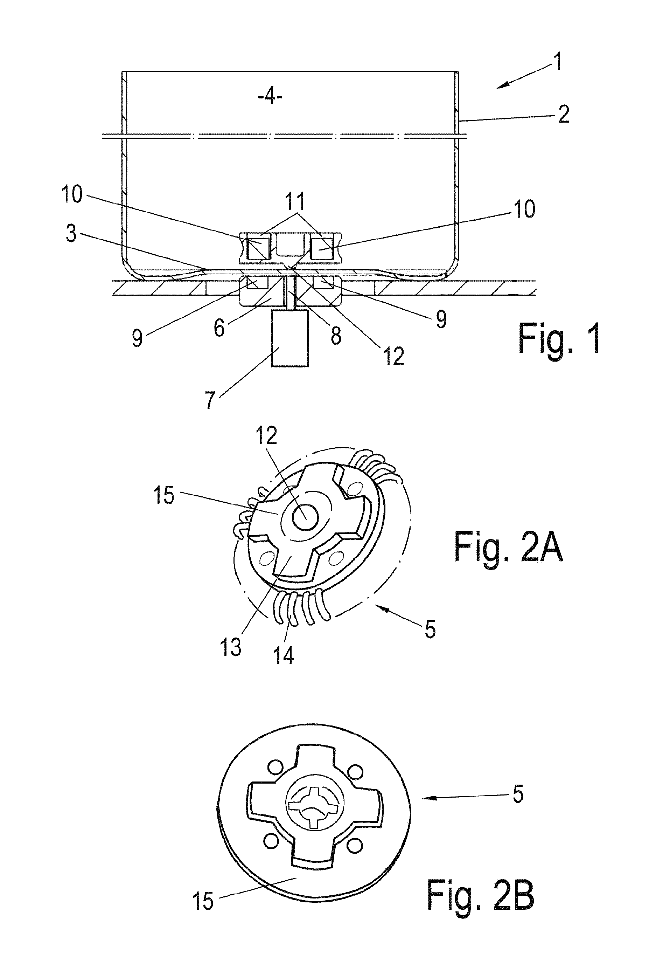

In den Figuren 2A und 2B ist der Quirl 5 im Detail gezeigt. Der Quirl 5 umfasst einen Kunststoffkörper 13, an dessen radialem Umfang mehrere Arme 14 hervorstehen, die bei einer Drehbewegung besenartig die Luft in die Milch einschlagen können. Der Kunststoffkörper 13 umfasst vier Aufnahmen 15, in denen die Magnete 10 geschützt angeordnet sind. Ferner ist im Bereich der Drehachse das Auflager 12 ausgebildet, das beispielsweise aus Metall hergestellt sein kann und für eine geringe Reibung zwischen dem Quirl 5 und dem Boden 3 des Behälters 2 sorgt.

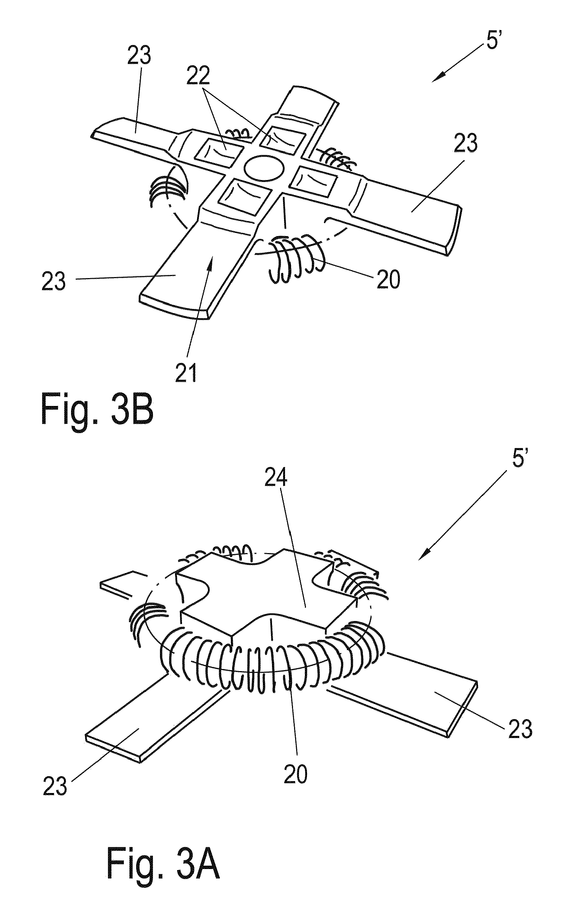

In den Figuren 3A und 3B ist eine modifizierte Ausführungsform eines Quirls 5' gezeigt, der statt den Armen 14 eine Spirale 20 aufweist, die beispielsweise aus einem Draht hergestellt ist. Die Spirale 20 ist ringförmig an einem Formkörper 21 aus Kunststoff gehalten, wobei der Formkörper 21 mehrere Arme 23 aufweist, insbesondere vier Arme 23, die radial nach außen über die Spirale 20 hervorstehen. Innerhalb der Spirale 20 sind an den Armen 23 jeweils eine Aufnahme 22 zum Einfügen eines Magneten ausgebildet. Innerhalb der Spirale 20 ist ferner ein Halter 24 vorgesehen, der die Spirale 20 an dem Formkörper 21 aus Kunststoff fixiert.

Bei dem Quirl 5' dienen die Arme 23 als Flügel, die durch eine entsprechende Geometrie einen Auftrieb erzeugen um den Reibungswiderstand zu verringern Durch die Länge der Arme 23 kann zudem eine Zentrierung des Quirls 5' innerhalb des Behälters 2 bewirkt werden.

In dem dargestellten Ausführungsbeispiel ist der Boden 3 im Wesentlichen eben ausgebildet, zumindest sind keine scharfen Kanten oder Stufen an dem Boden 3 ausgebildet. Es ist natürlich möglich, statt einer völlig ebenen Ausbildung des Bodens 3 auch eine kleinere Vertiefung, insbesondere eine kalottenförmige Vertiefung, oder eine Wölbung vorzusehen, um ein Auflager 12 aufzunehmen und zu zentrieren. Bei einer völlig ebenen Ausbildung des Bodens 3 besteht allerdings der Vorteil, dass die Reinigung des Behälters 2 noch leichter ist.

Für die Reinigung wird der Quirl 5 unter Überwindung der Magnetkräfte zwischen den Magneten 9 und 10 aus dem Behälter 2 entnommen und kann separat gereinigt werden, insbesondere auch in einem Geschirrspüler. Auch der Behälter 2 kann separat gereinigt werden, wobei dieser in einer möglichen Ausgestaltung auch von dem Antrieb mit dem Elektromotor 7 und dem Antriebselement abgenommen werden kann.

In dem dargestellten Ausführungsbeispiel weisen der Quirl 5 und das Antriebselement 6 jeweils vier Magnete 9 und 10 auf. Es ist natürlich auch möglich, eine andere Anzahl von Magneten 9 und 10 an dem Quirl 5 und dem Antriebselement 6 vorzusehen. Zudem können die Geometrien zum Aufschäumen der Milch an dem Quirl 5 oder 5' variiert werden.

Es können unterschiedliche Spiralen 20 eingesetzt werden, um verschiedene Schaumqualitäten herzustellen. Daher können auch mehrerer Quirle 5 oder 5' vorgesehen werden, die der Benutzer je nach Bedarf auswählen kann.

### Bezugszeichenliste

- 1: Vorrichtung
- 2: Behälter
- 3: Boden
- 4: Innenraum
- 5, 5': Quirl
- 6: Antriebselement
- 7: Elektromotor
- 8: Welle
- 9: Magnet
- 10: Magnet
- 12: Auflager
- 13: Kunststoffkörper
- 14: Arm
- 15: Aufnahme
- 20: Spirale
- 21: Formkörper
- 22: Aufnahme
- 23: Arm
- 24: Halter

## Patentansprüche

1. Vorrichtung (1) zum Aufschäumen von Milch, mit einem Behälter (2), in den Milch einfüllbar ist, einer Heizeinrichtung zum Erhitzen der Milch und mindestens einem motorisch angetriebenen Quirl (5, 5'), der drehbar innerhalb des Behälters (2) zum Aufschäumen der Milch angeordnet ist, **dadurch gekennzeichnet, dass** der Quirl (5, 5') mindestens einen Magneten (10) aufweist, der mit einem drehbaren Antriebselement (6) magnetisch gekoppelt ist.

2. Vorrichtung nach Anspruch 1, **dadurch gekennzeichnet, dass** das drehbare Antriebselement (6) in oder unter dem Boden (3) des Behälters (2) angeordnet ist.

3. Vorrichtung nach Anspruch 1 oder 2, **dadurch gekennzeichnet, dass** an dem Antriebselement (6) und dem Quirl (5, 5') jeweils mindestens zwei Magnete (9, 10) vorgesehen sind.

4. Vorrichtung nach Anspruch 3, **dadurch gekennzeichnet, dass** die Magnete (9, 10) in einem gleichen Abstand zur Drehachse angeordnet sind und gegenüberliegende Magnete (9, 10) am Quirl (5, 5') und dem Antriebselement (6) entgegengesetzt gepolt sind.

5. Vorrichtung nach einem der vorhergehenden Ansprüche, **dadurch gekennzeichnet, dass** das Antriebselement (6) über einen Elektromotor (7) angetrieben ist.

6. Vorrichtung nach einem der vorhergehenden Ansprüche, **dadurch gekennzeichnet, dass** der Boden (3) des Behälters (2) im Wesentlichen eben ausgebildet ist.

7. Vorrichtung nach einem der vorhergehenden Ansprüche, **dadurch gekennzeichnet, dass** der Quirl (5, 5') aus dem Behälter (2) unter Entkopplung der Magnetkräfte herausnehmbar ist.

8. Vorrichtung nach einem der vorhergehenden Ansprüche, **dadurch gekennzeichnet, dass** das Antriebselement (6) an einer Achse (8) unter oder in dem Behälter (2) drehbar gelagert ist.

9. Vorrichtung nach einem der vorhergehenden Ansprüche, **dadurch gekennzeichnet, dass** der Quirl (5, 5') ein Auflager (12) aufweist, das eine Drehachse für den Quirl (5, 5') bildet.

10. Vorrichtung nach einem der vorhergehenden Ansprüche, **dadurch gekennzeichnet, dass** an dem Boden (3) des Behälters (2) eine insbesondere kalottenförmige Vertiefung vorgesehen ist, in die ein Lager des Quirls (5, 5') eingefügt ist.

11. Vorrichtung nach einem der vorhergehenden Ansprüche, **dadurch gekennzeichnet, dass** der Quirl (5, 5') zum Aufschäumen der Milch mehrere Arme (14) und/oder eine Spirale (20) aufweist.

12. Vorrichtung nach einem der vorhergehenden Ansprüche, **dadurch gekennzeichnet, dass** der Quirl (5, 5') einen Kunststoffkörper (15) aufweist, an dem ein Auflager (16) aus Metall vorgesehen ist.

13. Vorrichtung nach einem der vorhergehenden Ansprüche, **dadurch gekennzeichnet, dass** der Quirl (5') eine ringförmige Spirale (20) aufweist, die an einem Halter aus Kunststoff fixiert ist.

14. Vorrichtung nach einem der vorhergehenden Ansprüche, **dadurch gekennzeichnet, dass** der Behälter (2) an seiner Innenseite beschichtet ist.
